# EUROPEAN PATENT APPLICATION

(11) **EP 4 567 481 A1**
(43) Date of publication of application: **11.06.2025**
(21) Application number: 23849829.9
(22) Date of filing: 06.07.2023
(51) Int. Cl.: G02B 6/26, G02B 6/36

(54) **OPTICAL CONNECTOR, FERRULE, AND OPTICAL COUPLING STRUCTURE**

(30) Priority: 03.08.2022 JP 2022123796
(71) Applicant: SUMITOMO ELECTRIC INDUSTRIES, LTD., Osaka-shi, Osaka 541-0041 (JP)
(72) Inventor: MORISHIMA Tetsu, Osaka-shi, Osaka 541-0041 (JP)
(74) Representative: TBK
(86) International application number: PCT/JP2023/025164
(87) International publication number: WO 2024/029270

(57) **Abstract**

An optical connector according to one embodiment of the present disclosure comprises: a plurality of optical fibers each having a coated part and a coating-removed part, and each having a core and/or a stress applying part at a position displaced from the central axis thereof; and a ferrule having a front end surface and a back end surface that are arranged in a first direction in which the central axis extends, and a plurality of fiber holding parts extending in the first direction between the front end surface and the back end surface and respectively holding the plurality of optical fibers while being arranged in a second direction crossing the first direction. Each of the plurality of fiber holding parts includes a holding hole into which the coating-removed part is inserted in the first direction to maintain the position of the coating-removed part within a plane perpendicular to the first direction, and an introduction part located between the holding hole and the back end surface and having an inner wall surface in which a virtual circle having a diameter larger than the inner diameter of the holding hole is inscribed. The length of the holding hole in the first direction is shorter than the length of the introduction part in the first direction.

## Description

### TECHNICAL FIELD

The present disclosure relates to an optical connector, a ferrule, and an optical coupling structure. This application claims priority based on Japanese Patent Application No. 2022-123796 filed on August 3, 2022, and the entire contents of the Japanese patent application are incorporated herein by reference.

### BACKGROUND ART

Patent literature 1 discloses a ferrule for an optical connector. A plurality of fiber insertion holes for inserting a plurality of optical fibers respectively are formed inside the ferrule. Each of the plurality of fiber insertion holes has a small-diameter portion opening to the tip surface and an introduction portion communicating with the small-diameter portion and having an inside diameter larger than the small-diameter portion. When a plurality of optical fibers are mounted in the ferrule, each optical fiber is inserted from the introduction portion into the small-diameter portion and fixed.

### CITATION LIST

### PATENT LITERATURE

Patent literature 1: Japanese Unexamined Patent Application Publication No. 2002-333549

### SUMMARY OF INVENTION

An optical connector according to an embodiment of the present disclosure includes a plurality of optical fibers each including a coat removed portion from which a resin coat having a predetermined length from a tip surface is removed, a coated portion on which the resin coat remains, and at least one of a core and a stress applying portion at a position shifted from a center axis; and a ferrule having a front end surface and a rear end surface that are arranged in a first direction in which the center axis extends, the ferrule including a plurality of fiber holding portions each extending between the front end surface and the rear end surface in the first direction such that the plurality of fiber holding portions are arranged in a second direction intersecting the first direction, the plurality of fiber holding portions being each configured to hold a corresponding one of the plurality of optical fibers. Each of the plurality of fiber holding portions has a holding hole into which the coat removed portion is inserted in the first direction, the holding hole being configured to hold the coat removed portion so as to maintain a position of the coat removed portion in a plane perpendicular to the first direction, and an introduction portion located between the holding hole and the rear end surface and having an inner wall surface in which an imaginary circle having a diameter larger than an inside diameter of the holding hole is inscribed. A length of the holding hole in the first direction is shorter than a length of the introduction portion in the first direction.

### BRIEF DESCRIPTION OF THE DRAWINGS

FIG. 1 is a perspective view of an optical connector according to a first embodiment.
FIG. 2 is a cross-sectional view of the optical connector of FIG. 1.
FIG. 3 is a front view of an optical fiber provided in the optical connector of FIG. 1.
FIG. 4 is a cross-sectional view of a ferrule provided in the optical connector of FIG. 1.
FIG. 5 is another cross-sectional view of the ferrule of FIG. 4.
FIG. 6 is a cross-sectional view showing a state in which an optical fiber is mounted on the ferrule of FIG. 4.
FIG. 7 is a perspective view of an optical coupling structure provided in the optical connector of FIG. 1.
FIG. 8 is a diagram for explaining a problem of the optical connector according to comparative example 1.
FIG. 9 is a diagram for explaining a problem of the optical connector according to comparative example 2.
FIG. 10 is a cross-sectional view showing a modification of the ferrule.
FIG. 11 is a cross-sectional view showing a fiber holding portion provided in the ferrule of FIG. 10.
FIG. 12 is a cross-sectional view showing another modification of the fiber holding portion of FIG. 11.
FIG. 13 is a cross-sectional view of the optical connector according to the second embodiment.
FIG. 14 is a cross-sectional view of the ferrule provided in the optical connector of FIG. 13.
FIG. 15 is a perspective view of an optical-fiber holding member provided in the optical connector of FIG. 13.
FIG. 16 is a cross-sectional view showing a state in which an optical-fiber holding member is mounted on the ferrule of FIG. 14.
FIG. 17 is a cross-sectional view showing a modification of the optical connector of FIG. 13.
FIG. 18 is a perspective view of an optical-fiber holding member provided in the optical connector of FIG. 17.
FIG. 19 is a cross-sectional view showing another modification of the optical connector of FIG. 13.
FIG. 20 is a perspective view of an optical-fiber holding member provided in the optical connector of FIG. 19.
FIG. 21 is a cross-sectional view showing a modification of the optical-fiber holding member.

### DETAILED DESCRIPTION

### [Problems to be Solved by the Present Disclosure]

A plurality of optical fibers requiring rotational alignment may be mounted on the ferrule described in Patent Literature 1. However, since the clearance between the small-diameter portion of the fiber insertion hole of the ferrule and the optical fiber is small, when the optical fiber is inserted into the small-diameter portion, the twisting rotation of optical fiber is likely to be caused by the friction between the small-diameter portion and the optical fiber. Such a twisting rotation may cause an angular misalignment in the rotation direction of the optical fiber. Thus, it is difficult to hold such an optical fiber with high accuracy by such a ferrule.

### [Advantageous Effects of the Present Disclosure]

According to the optical connector, the ferrule, and the optical coupling structure of the present disclosure, a plurality of optical fibers can be held with high accuracy.

### [Description of Embodiments of Present Disclosure]

First, the contents of embodiments of the present disclosure will be listed and explained.

An optical connector according to an embodiment of the present disclosure includes a plurality of optical fibers each including a coat removed portion from which a resin coat having a predetermined length from a tip surface is removed, a coated portion on which the resin coat remains, and at least one of a core and a stress applying portion at a position shifted from a center axis; and a ferrule having a front end surface and a rear end surface that are arranged in a first direction in which the center axis extends, the ferrule including a plurality of fiber holding portions each extending between the front end surface and the rear end surface in the first direction such that the plurality of fiber holding portions are arranged in a second direction intersecting the first direction, the plurality of fiber holding portions being each configured to hold a corresponding one of the plurality of optical fibers. Each of the plurality of fiber holding portions has a holding hole into which the coat removed portion is inserted in the first direction, the holding hole being configured to hold the coat removed portion so as to maintain a position of the coat removed portion in a plane perpendicular to the first direction, and an introduction portion located between the holding hole and the rear end surface and having an inner wall surface in which an imaginary circle having a diameter larger than an inside diameter of the holding hole is inscribed. A length of the holding hole in the first direction is shorter than a length of the introduction portion in the first direction.

**In** the above-described optical connector, when a plurality of optical fibers are mounted in the ferrule, the rotationally aligned optical fiber is inserted in the first direction from the introduction portion of the fiber holding portion into the holding hole. In the holding hole, the position of the coat removed portion in the plane perpendicular to the first direction is held, and thus the clearance between the holding hole and the coat removed portion is set to be small. Thus, when the optical fiber is inserted into the holding hole, friction is likely to occur between the holding hole and the coat removed portion. Since the introduction portion has an inner wall surface in which an imaginary circle having a diameter larger than the inside diameter of the holding hole is inscribed, when the optical fiber is inserted into the holding hole, friction between the introduction portion and the coat removed portion is relatively unlikely to occur. Thus, in the above-described optical connector, the length of the holding hole in the first direction is set to be shorter than the length of the introduction portion in the first direction. When the length of the holding hole is shortened, the possibility of friction between the holding hole and the coat removed portion can be reduced. Further, even when friction occurs between the holding hole and the coat removed portion, the friction resistance between the holding hole and the coat removed portion can be reduced. As a result, it is possible to reduce the occurrence of twisting rotation of the optical fiber caused by friction between the holding hole and the coat removed portion. This can reduce the occurrence of angular misalignment (rotational misalignment) of the position of the optical fiber in the rotational direction. Thus, according to the optical connector described above, it is possible to hold a plurality of optical fibers with high accuracy.

(2) In the optical connector according to (1), the introduction portion may be an introduction hole in communication with the holding hole in the first direction. An inside diameter of the introduction hole defined by the diameter of the imaginary circle may be larger than or equal to an outside diameter of the coated portion. The coated portion may be inserted into the introduction hole. In this case, the coated portion is inserted into the introduction hole, and thus the orientation of the optical fiber can be regulated to be in a state along the first direction. Accordingly, the coat removed portion can be inserted into the holding hole in the first direction in a state in which friction between the coat removed portion and the holding hole is unlikely to occur. As a result, the occurrence of the rotational misalignment of the optical fiber can be reduced more reliably. Further, when the configuration of the introduction portion has a hole shape, the coat removed portion can be easily introduced from the introduction hole into the holding hole.

(3) In the optical connector according to (1), the introduction portion may be an introduction hole in communication with the holding hole in the first direction. An inside diameter of the introduction hole defined by the diameter of the imaginary circle may be larger than or equal to an outside diameter of the coat removed portion. Between the coat removed portion and the coated portion, only the coat removed portion may be inserted into the introduction hole. In this case, the coat removed portion is inserted into the introduction hole, and thus the orientation of the optical fiber can be regulated to be in a state along the first direction. Accordingly, the coat removed portion can be inserted into the holding hole in the first direction in a state in which friction between the coat removed portion and the holding hole is unlikely to occur. As a result, the occurrence of the rotational misalignment of the optical fiber can be reduced more reliably. Further, when the configuration of the introduction portion has a hole shape, the coat removed portion can be easily introduced from the introduction hole into the holding hole.

(4) In the optical connector according to (1), the introduction portion may be an introduction groove in communication with the holding hole in the first direction. A diameter of the imaginary circle inscribed in the introduction groove may be larger than or equal to an outside diameter of the coat removed portion. Between the coat removed portion and the coated portion, only the coat removed portion may be accommodated in the introduction groove. In this case, the orientation of the optical fiber can be regulated to a state along the first direction by the coat removed portion being accommodated in the introduction groove. Accordingly, the coat removed portion can be inserted into the holding hole in the first direction in a state in which friction between the coat removed portion and the holding hole is unlikely to occur. As a result, the occurrence of the rotational misalignment of the optical fiber can be reduced more reliably. Further, when the configuration of the introduction portion has a groove shape, the optical fiber can be positioned with respect to the introduction portion with high accuracy.

(5) In the optical connector according to (1), the introduction portion may be an introduction groove in communication with the holding hole in the first direction. A diameter of the imaginary circle inscribed in the introduction groove may be larger than or equal to an outside diameter of the coated portion. The coated portion may be accommodated in the introduction groove. In this case, the orientation of the optical fiber can be regulated to a state along the first direction by the coated portion being accommodated in the introduction groove. Accordingly, the coat removed portion can be inserted into the holding hole in the first direction in a state in which friction between the coat removed portion and the holding hole is unlikely to occur. As a result, the occurrence of the rotational misalignment of the optical fiber can be reduced more reliably. Further, when the configuration of the introduction portion has a groove shape, the optical fiber can be positioned with respect to the introduction portion with high accuracy.

(6) The optical connector according to any one of (1) to (5) may further include an optical-fiber holding member disposed at a position inside the ferrule at which the optical-fiber holding member faces the plurality of fiber holding portions in the first direction, the optical-fiber holding member being configured to hold the plurality of optical fibers. In this case, the optical-fiber holding member is disposed inside the ferrule in a state where the plurality of rotationally aligned optical fibers are held by the optical-fiber holding member, and thus the coat removed portions of the plurality of rotationally aligned optical fibers can be inserted into the plurality of holding holes at once. This facilitates the mounting operation of the plurality of optical fibers with respect to the ferrule.

(7) In the optical connector according to (6), the optical-fiber holding member may be a resin layer configured to collectively cover the coated portions of the plurality of optical fibers. In this case, the optical-fiber holding member can be achieved with a simple configuration.

(8) In the optical connector according to (6), the optical-fiber holding member may have a plurality of V-shaped grooves each extending in the first direction such that the plurality of V-shaped grooves are arranged in the second direction, the plurality of V-shaped grooves being each configured to accommodate a corresponding one of the plurality of optical fibers. In this case, the optical-fiber holding member is disposed inside the ferrule in a state where the plurality of rotationally aligned optical fibers are each accommodated and fixed in the plurality of V-shaped grooves of the optical-fiber holding member, whereby the coat removed portions of the plurality of optical fibers can be inserted into the plurality of holding holes at once in a state where the positions of the plurality of optical fibers are along the first direction. This makes it possible to more reliably reduce the possibility of friction occurring between the holding hole and the coat removed portion, and to facilitate the mounting operation of the plurality of optical fibers with respect to the ferrule.

(9) In the optical connector according to (6), the optical-fiber holding member may have a plurality of through holes each extending through the optical-fiber holding member in the first direction such that the plurality of through holes are arranged in the second direction, the plurality of through holes being each configured to allow a corresponding one of the plurality of optical fibers to extend therethrough. In this case, the optical-fiber holding member is disposed inside the ferrule in a state where the plurality of rotationally aligned optical fibers are each inserted into and fixed to the plurality of through holes of the optical-fiber holding member, whereby the coat removed portions of the plurality of optical fibers can be inserted into the plurality of holding holes at once in a state where the orientation of the plurality of optical fibers are along the first direction. This makes it possible to more reliably reduce the possibility of friction occurring between the holding hole and the coat removed portion, and to facilitate the mounting operation of the plurality of optical fibers with respect to the ferrule.

(10) In the optical connector according to any one of (1) to (9), each of the optical fibers may be any one of a multi core fiber, a polarization maintaining fiber, and a bundle fiber. In cases when such optical fibers are used, rotational alignment of the optical fibers is necessary, so the rotational misalignment of the optical fibers due to friction between the holding hole and the coat removed portion becomes a problem. In contrast, in the optical connector described above, since the occurrence of the rotational misalignment of the optical fiber can be reduced, the above-described effect can be suitably obtained.

(11) A ferrule according to an embodiment of the present disclosure is a ferrule configured to hold a plurality of optical fibers each including a coat removed portion from which a resin coat having a predetermined length from a tip surface is removed, a coated portion on which the resin coat remains, and at least one of a core and a stress applying portion at a position shifted from a center axis. The ferrule includes a front end surface; a rear end surface, the rear end surface and the front end surface being arranged in a first direction; and a plurality of fiber holding portions each extending between the front end surface and the rear end surface in the first direction such that the plurality of fiber holding portions are arranged in a second direction intersecting the first direction, the plurality of fiber holding portions being each configured to hold a corresponding one of the plurality of optical fibers. Each of the plurality of fiber holding portions has a holding hole into which the coat removed portion is inserted in the first direction, the holding hole being configured to maintain a position of the coat removed portion in a plane perpendicular to the first direction, and an introduction portion located between the holding hole and the rear end surface and having an inner wall surface in which an imaginary circle having a diameter larger than an inside diameter of the holding hole is inscribed. A length of the holding hole in the first direction is shorter than a length of the introduction portion in the first direction. In this ferrule, as described above, the occurrence of the rotational misalignment of the optical fiber can be reduced by shortening the length of the holding hole. Thus, according to the above ferrule, it is possible to hold a plurality of optical fibers with high accuracy.

(12) An optical coupling structure according to an embodiment of the present disclosure includes a first optical connector and a second optical connector as the optical connectors according to any one of (1) to (10). The first optical connector is disposed to face the second optical connector in the first direction and is optically coupled to the second optical connector. Since the optical coupling structure includes the first optical connector and the second optical connector as the optical connectors, the optical coupling structure can hold the plurality of optical fibers with high accuracy as described above.

### [Details of Embodiments of Present Disclosure]

Specific examples of an optical connector, a ferrule, and an optical coupling structure according to embodiments of the present disclosure will be described below with reference to the drawings. The present disclosure is not limited to these examples, but is defined by the scope of the claims, and is intended to include all modifications within the meaning and scope equivalent to the scope of the claims. In the following description, the same elements are denoted by the same reference numerals in the description of the drawings, and redundant description will be appropriately omitted.

### [First embodiment]

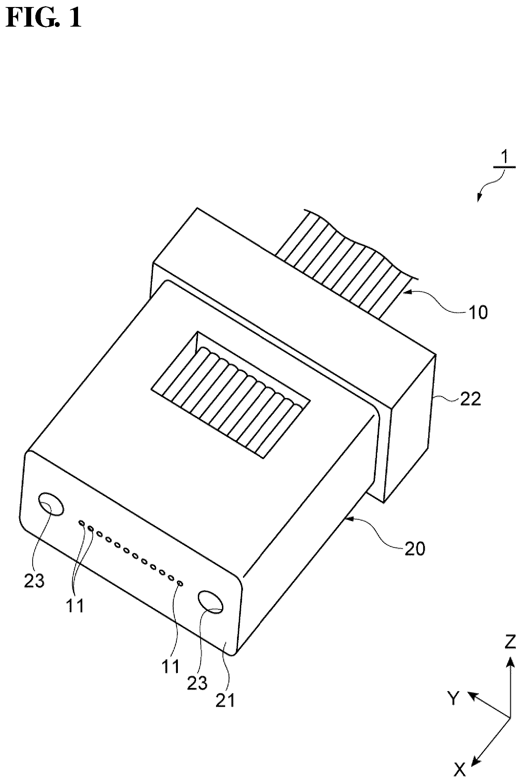

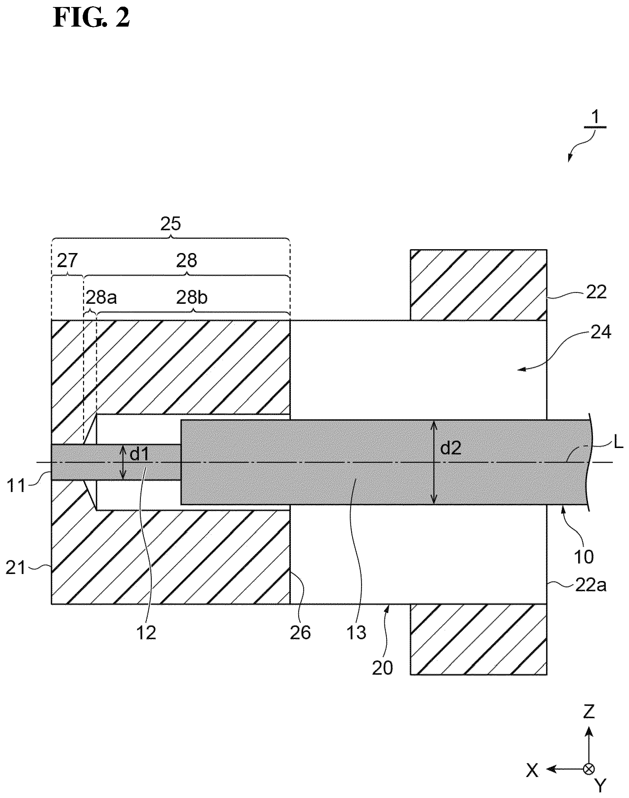

FIG. 1 is a perspective view of an optical connector 1 according to the first embodiment. FIG. 2 is a cross-sectional view of optical connector 1. In the following description, for convenience of description, a longitudinal direction of optical connector 1 is referred to as an X direction (an example of a "first direction"), a lateral direction of optical connector 1 is referred to as a Y direction (an example of a "second direction"), and a height direction of optical connector 1 is referred to as a Z direction. The X direction, the Y direction, and the Z direction intersect (in one example, are orthogonal to) each other. In the following description, one side in the Z direction may be referred to as "upper", the other side in the Z direction as "lower", one side in the X direction as "front", and the other side in the X direction as "rear".

As shown in FIG. 1, optical connector 1 includes, for example, a plurality of optical fibers 10 and a ferrule 20 that holds the plurality of optical fibers 10. The plurality of optical fibers 10 are cables that transmit optical signals. The plurality of optical fibers 10 extend in the X direction and are arranged in the Y direction. FIG. 1 shows an example in which twelve optical fibers 10 are arranged in a line in the Y direction. However, the number of the plurality of optical fibers 10 is not limited to twelve, and may be another number such as four, eight, or twenty four. The plurality of optical fibers 10 may be arranged in two or more rows.

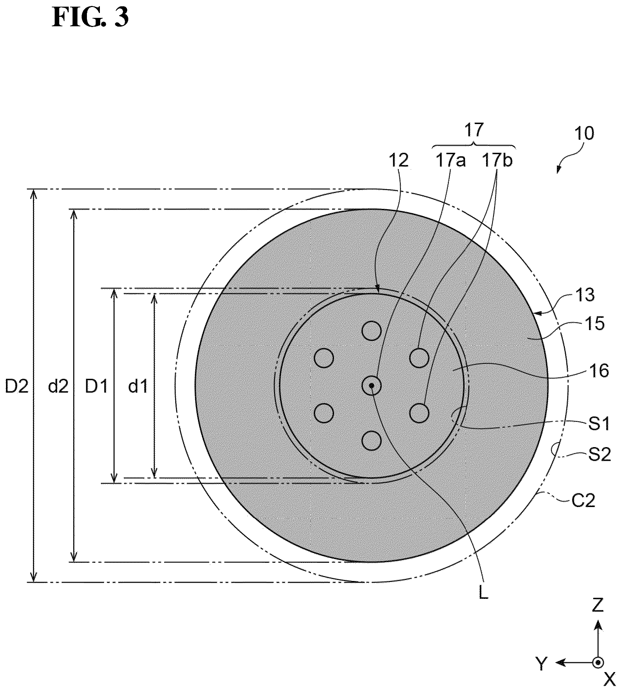

As shown in FIG. 2, each optical fiber 10 has, for example, a tip surface 11, a coat removed portion 12, and a coated portion 13. In FIG. 2 and the subsequent drawings, optical fiber 10 may be shown in light gray for ease of understanding. Tip surface 11 is an end surface positioned at the tip of optical fiber 10 in the X direction. Coat removed portion 12 is a portion of optical fiber 10 where a resin coat 15 (see FIG. 3) of a predetermined length is removed from tip surface 11. Coated portion 13 is a portion of optical fiber 10 where resin coat 15 remains. Coated portion 13 is provided on the opposite side of tip surface 11 with coat removed portion 12 interposed therebetween. In coat removed portion 12, a cladding 16 (see FIG. 3) of optical fiber 10 is exposed. The outside diameter of coat removed portion 12 (that is, the diameter of cladding 16) is, for example, 30 µm to 300 µm. In coated portion 13, cladding 16 of optical fiber 10 is covered with resin coat 15. The outside diameter of coated portion 13 is, for example, 50 µm to 500 µm.

FIG. 3 is a front view of optical fiber 10. Optical fiber 10 is an optical fiber that requires rotational alignment with respect to a center axis L. In the embodiment, a multi core fiber (MCF) is exemplified as optical fiber 10 that requires rotational alignment. In this case, optical fiber 10 has a plurality of cores 17 covered with cladding 16. In the example shown in FIG. 3, the plurality of cores 17 include a center core 17a disposed on center axis L and a plurality of (for example, six) peripheral cores 17b disposed at positions shifted from center axis L. The state in which peripheral core 17b is shifted from center axis L may be a state in which the center of peripheral core 17b does not coincide with center axis L when viewed in the X direction.

The number and arrangement of the plurality of cores 17 are not limited to the example shown in FIG. 3, and can be changed as appropriate. For example, the number of the plurality of cores 17 is not limited to six, and may be two, four, or eight or more. The plurality of cores 17 may not include center core 17a arranged on center axis L. As optical fiber 10 that requires rotational alignment, in addition to the multi core fiber, for example, a bundle fiber, a polarization maintaining fiber (PMF), and the like are exemplified. When optical fiber 10 is a polarization maintaining fiber, optical fiber 10 has a stress applying portion at a position shifted from center axis L. In this case, for example, optical fiber 10 has a center core disposed on center axis L, and a pair of stress applying portions are disposed on both sides of the center core.

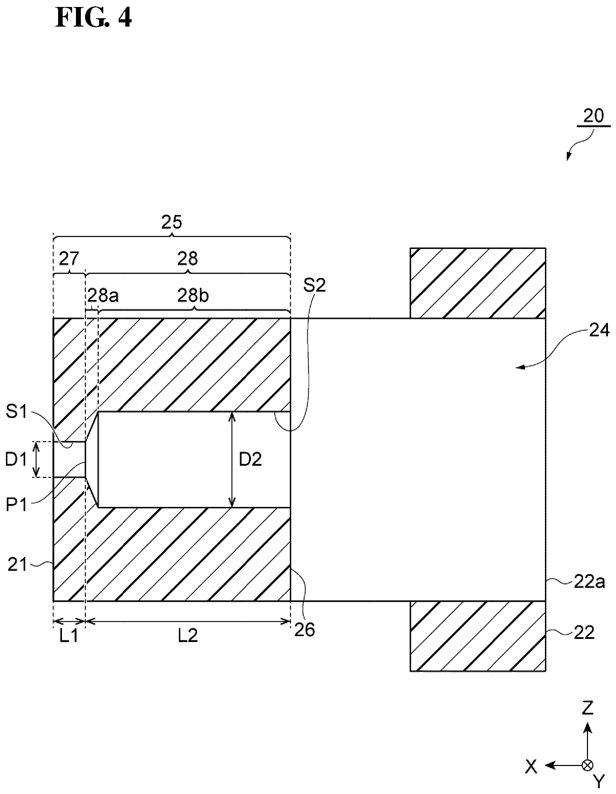

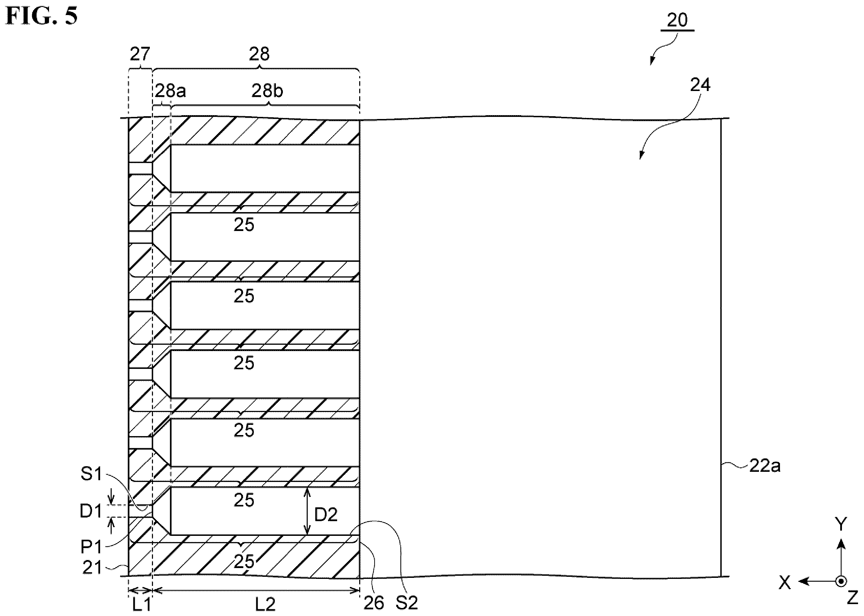

FIG. 4 is a cross-sectional view of ferrule 20. FIG. 5 is another cross-sectional view of ferrule 20. FIGS. 4 and 5 show a state in which the plurality of optical fibers 10 are removed from optical connector 1 of FIG. 2. Ferrule 20 is a member that holds the end portions of the plurality of optical fibers 10, and is, for example, an MT ferrule. Ferrule 20 has a substantially rectangular parallelepiped appearance. Ferrule 20 is made of a resin such as polyphenylene sulfide (PPS). Ferrule 20 includes, for example, a front end surface 21, a rear end surface 22, a pair of guide holes 23, 23 (see FIG. 1), a fiber accommodation portion 24, and a plurality of fiber holding portions 25.

Front end surface 21 is an end surface positioned at the front end of ferrule 20 in the X direction. Rear end surface 22 is an end surface positioned at the rear end of ferrule 20 in the X direction. Front end surface 21 and rear end surface 22 extend along the Y direction and the Z direction, and are arranged in the X direction. The pair of guide holes 23, 23 are opened at both ends of front end surface 21 in the Y direction, and extend in the X direction from front end surface 21 toward rear end surface 22 (see FIG. 1). Rear end surface 22 is formed with an opening 22a capable of collectively receiving the plurality of optical fibers 10.

Fiber accommodation portion 24 is formed at the rear portion of ferrule 20 closer to rear end surface 22, between front end surface 21 and rear end surface 22. The rear portion of ferrule 20 is a portion of ferrule 20 from a wall surface 26 to rear end surface 22 formed inside ferrule 20. Wall surface 26 is a plane along the Y direction and the Z direction, and is disposed between front end surface 21 and rear end surface 22 in the X direction. Fiber accommodation portion 24 is an inner space formed between wall surface 26 and rear end surface 22 in the rear portion of ferrule 20. Fiber accommodation portion 24 extends forward from opening 22a of rear end surface 22 and is connected to the plurality of fiber holding portions 25. Fiber accommodation portion 24 can collectively accommodate the plurality of optical fibers 10 received from opening 22a.

The plurality of fiber holding portions 25 are formed at a front portion of ferrule 20 closer to front end surface 21, between front end surface 21 and rear end surface 22. The front portion of ferrule 20 is the portion of ferrule 20 from front end surface 21 to wall surface 26. The plurality of fiber holding portions 25 extend in the X direction and are arranged in the Y direction in correspondence with the plurality of optical fibers 10 in the front portion of ferrule 20. The plurality of fiber holding portions 25 each holds the plurality of optical fibers 10 introduced into fiber accommodation portion 24.

Each fiber holding portion 25 includes, for example, a holding hole 27 for holding optical fiber 10 and an introduction hole 28 (an example of an "introduction portion") for introducing optical fiber 10 into the holding portion. Holding hole 27 is a circular small-diameter hole extending in the X direction from front end surface 21. An inner wall surface S1 constituting holding hole 27 has constant an inside diameter D1 at each position along the X direction. As shown in FIG. 2, coat removed portion 12 of optical fiber 10 is inserted into holding hole 27. Holding hole 27 is opened at front end surface 21, and tip surface 11 of optical fiber 10 is exposed from the opening of front end surface 21. Holding hole 27 maintains the position of coat removed portion 12 in the YZ plane perpendicular to the X direction. Thus, the clearance between holding hole 27 and coat removed portion 12 in the YZ plane is set to be extremely small so that the position of coat removed portion 12 with respect to holding hole 27 in the YZ plane is determined.

As shown in FIG. 4 and FIG. 5, introduction hole 28 is a circular large-diameter hole extending in the X direction from holding hole 27 to wall surface 26. Introduction hole 28 communicates with holding hole 27 in the X direction, and is formed to be larger than holding hole 27 when viewed in the X direction. Introduction hole 28 communicating with holding hole 27 in the X direction means that the inner space of introduction hole 28 and the inner space of holding hole 27 are connected in the X direction. When viewed in the X direction, the center of introduction hole 28 coincides with, for example, the center of holding hole 27. The center of introduction hole 28 may not exactly coincide with the center of holding hole 27. The misalignment between the center of introduction hole 28 and the center of holding hole 27 as viewed in the X direction may be, for example, 3 µm or less. Introduction hole 28 opens in wall surface 26 and receives optical fiber 10 from the opening of wall surface 26. Introduction hole 28 includes, for example, a tapered portion 28a and a constant diameter portion 28b.

Constant diameter portion 28b is a portion of introduction hole 28 closer to rear end surface 22 in the X direction. Constant diameter portion 28b extends in the X direction from rear end surface 22 toward the front. An inner wall surface S2 constituting constant diameter portion 28b has a constant inside diameter D2 at each position along the X direction. Inside diameter D2 of inner wall surface S2 is larger than inside diameter D1 of inner wall surface S1. As shown in FIG. 3, inside diameter D2 of inner wall surface S2 can be expressed as a diameter D2 of an imaginary circle C2 inscribed in inner wall surface S2. Inside diameter D2 of inner wall surface S2 is set to be equal to an outside diameter d2 of coated portion 13 or slightly larger than outside diameter d2 of coated portion 13, for example. Inside diameter D1 of inner wall surface S1 is set to be equal to an outside diameter d1 of coat removed portion 12 of optical fiber 10 or slightly larger than outside diameter d1 of coat removed portion 12, for example. As shown in FIG. 2, coated portion 13 is inserted into constant diameter portion 28b. Coated portion 13 is inserted into constant diameter portion 28b, so that the movement of optical fiber 10 in the YZ plane is restricted, and the orientation of optical fiber 10 is regulated to be along the X direction.

As shown in FIG. 4 and FIG. 5, tapered portion 28a is provided between constant diameter portion 28b and holding hole 27. Tapered portion 28a is formed such that the inside diameter of tapered portion 28a decreases from constant diameter portion 28b toward holding hole 27 in the X direction. Coat removed portion 12 of optical fiber 10 inserted into constant diameter portion 28b is guided to holding hole 27 by tapered portion 28a. Thus, introduction hole 28 serves to assist the introduction of coat removed portion 12 into holding hole 27.

In the embodiment, a length L1 of holding hole 27 in the X direction is set to be shorter than the length L2 of introduction hole 28 in the X direction. The length L1 of holding hole 27 is measured from front end surface 21 to a connection portion P1 between holding hole 27 and introduction hole 28 in the X direction. The length L2 of introduction hole 28 is measured from connection portion P1 to wall surface 26 in the X direction. The sum of the lengths L1 of holding hole 27 and the lengths L2 of introduction hole 28 (L1 + L2) corresponds to the X direction length of fiber holding portion 25, that is, the X direction distance from front end surface 21 to rear end surface 22. Thus, the length L1 of holding hole 27 is shorter than the length L2 of introduction hole 28 can be restated as the length L1 of holding hole 27 is smaller than half the length (L1 + L2) of fiber holding portion 25. For example, when the length of fiber holding portion 25 is 4 mm, the length L1 of holding hole 27 is set to be 0.5 mm or more and less than 2 mm. In one example, the length L2 of introduction hole 28 is set to 3 mm, and the length L1 of holding hole 27 is set to 1 mm. When a ratio of the length L2 of introduction hole 28 with respect to the length (L1 + L2) of fiber holding portion 25 is defined, the ratio may be set to be, for example, 12% or more and less than 50%.

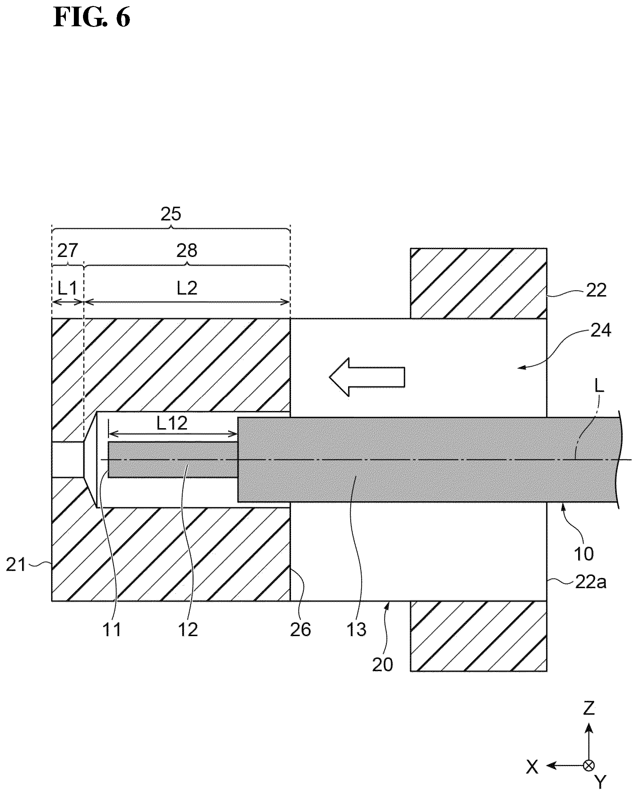

FIG. 6 is a cross-sectional view showing a state in which optical fiber 10 is mounted on ferrule 20. When optical fiber 10 of ferrule 20 is mounted, for example, rotationally aligned optical fiber 10 is introduced from opening 22a of rear end surface 22 into fiber accommodation portion 24, and optical fiber 10 is inserted from fiber accommodation portion 24 into introduction hole 28 of fiber holding portion 25 in the X direction. Here, a length L12 of coat removed portion 12 is usually set to be approximately 2 mm, which is half of the length (L1 + L2) of fiber holding portion 25. Thus, the length L1 of holding hole 27 is shorter than the length L12 of coat removed portion 12, and the length L2 of introduction hole 28 is longer than the length L12 of coat removed portion 12. Then, coated portion 13 enters introduction hole 28 before tip surface 11 of optical fiber 10 that has entered introduction hole 28 reaches holding hole 27.

Subsequently, when coated portion 13 is inserted into introduction hole 28 in the X direction, the movement of coated portion 13 in the YZ plane is restricted in introduction hole 28, and thus the orientation of optical fiber 10 is regulated to be along the X direction. Coat removed portion 12 is inserted into holding hole 27 in the X direction in this state. Then, optical fiber 10 is fixed to fiber holding portion 25 by an adhesive. Thus, optical connector 1 shown in FIG. 2 is obtained. After coat removed portion 12 is inserted into holding hole 27, optical fiber 10 may be rotationally aligned. However, in this case, since a clearance between coat removed portion 12 and holding hole 27 is very small, it may be difficult to perform rotational alignment of optical fiber 10.

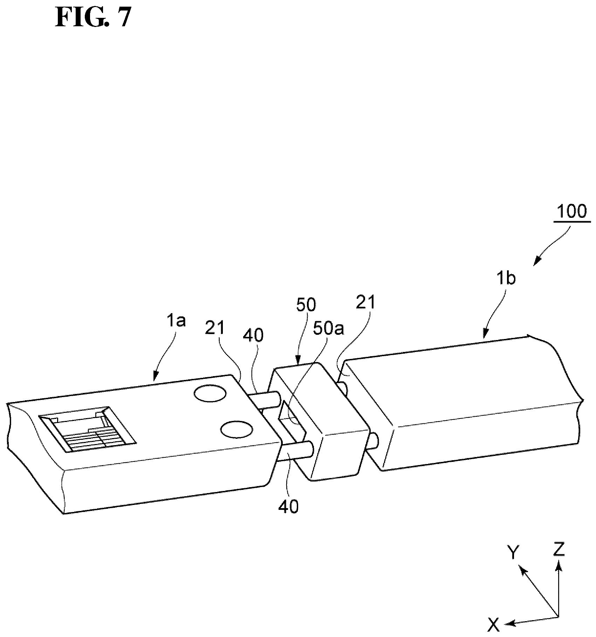

FIG. 7 is a perspective view of an optical coupling structure 100 according to the embodiment. Optical coupling structure 100 includes, for example, a first optical connector 1a, a second optical connector 1b, a pair of guide pins 40, 40, and a spacer 50. First optical connector 1a and second optical connector 1b have the same configuration as optical connector 1 described above. In optical coupling structure 100, front end surface 21 of first optical connector 1a and front end surface 21 of second optical connector 1b face each other in the X direction with a gap therebetween. The pair of guide pins 40, 40 are fitted into the pair of guide holes 23, 23 of first optical connector 1a and the pair of guide holes 23, 23 of second optical connector 1b. Thus, the positions of first optical connector 1a and second optical connector 1b in the YZ plane are defined.

Spacer 50 is a plate-like member having an opening 50a. Spacer 50 is disposed between front end surface 21 of first optical connector 1a and front end surface 21 of second optical connector 1b. Opening 50a allows a plurality of optical paths extending between first optical connector 1a and second optical connector 1b to pass therethrough. Thus, first optical connector 1a and second optical connector 1b are optically coupled. Spacer 50 abuts against front end surface 21 of first optical connector 1a and front end surface 21 of second optical connector 1b. Thus, a gap between first optical connector 1a and second optical connector 1b in the X direction is defined.

The effects obtained by optical connector 1, ferrule 20, and optical coupling structure 100 according to the embodiment described above will be described together with the problems of the comparative example.

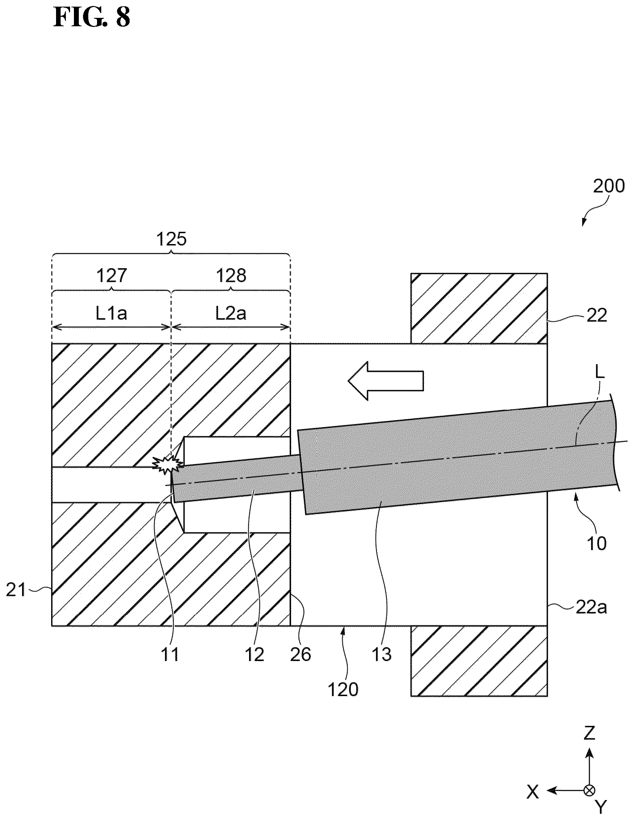

FIG. 8 is a diagram for explaining a problem of an optical connector 200 according to comparative example 1. In optical connector 200 according to the comparative example 1, a length L1a of a holding hole 127 of a fiber holding portion 125 formed in a ferrule 120 is set to be equal to a length L2a of an introduction hole 128 of fiber holding portion 125. When optical fiber 10 is mounted on ferrule 120, coat removed portion 12 of optical fiber 10 reaches holding hole 127 before coated portion 13 of optical fiber 10 enters introduction hole 128. In this case, coat removed portion 12 enters holding hole 127 in a state where the orientation of optical fiber 10 is largely inclined from the X direction. When coat removed portion 12 is obliquely inserted into holding hole 127, coat removed portion 12 is brought into contact with holding hole 127, and the twisting rotation of optical fiber 10 is caused by the friction between coat removed portion 12 and holding hole 127. As a result, an angular misalignment in the rotational direction of optical fiber 10 (that is, a rotational misalignment) occurs. Further, since the clearance between holding hole 127 and coat removed portion 12 is set to be extremely small, coat removed portion 12 is likely to come into contact with holding hole 127. Thus, even in the process of inserting coat removed portion 12 into holding hole 127, the rotational misalignment of optical fiber 10 is likely to occur. Such rotational misalignment causes positional misalignment of the core on tip surface 11 of optical fiber 10, which may cause deterioration of optical characteristics such as an increase in connection loss.

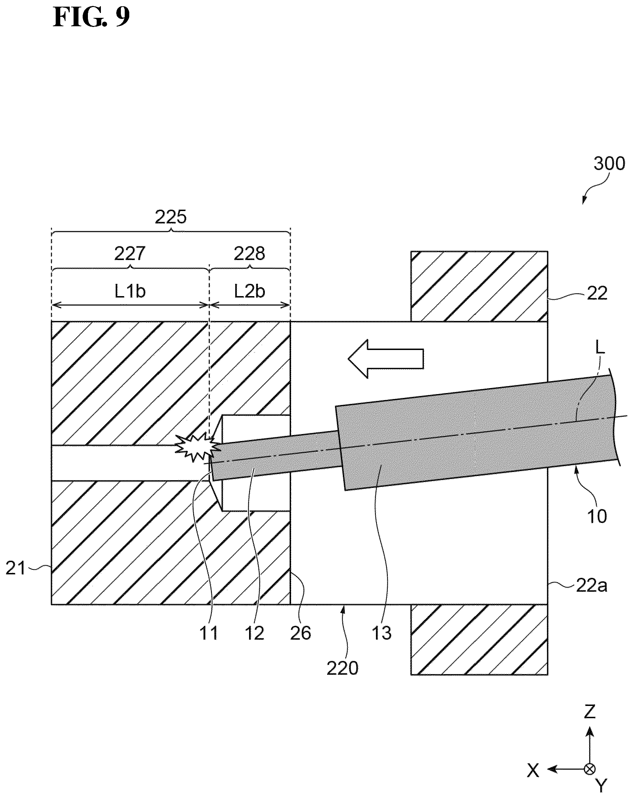

FIG. 9 is a diagram for explaining a problem of an optical connector 300 according to comparative example 2. In optical connector 300 according to the comparative example 2, a length L1b of a holding hole 227 of a fiber holding portion 225 formed in a ferrule 220 is set to be longer than a length L2b of an introduction hole 228 of fiber holding portion 225. When optical fiber 10 is mounted on ferrule 220, coat removed portion 12 enters holding hole 227 in a state in which the orientation of optical fiber 10 is further largely inclined from the X direction. In this case, coat removed portion 12 is more likely to contact holding hole 227, and thus, the rotational misalignment of optical fiber 10 is likely to occur. Further, when holding hole 227 is set to be long as described above, coat removed portion 12 is more likely to come into contact with respect to holding hole 227, and the contact area of coat removed portion 12 with respect to holding hole 227 increases. In this case, since the friction resistance between holding hole 227 and coat removed portion 12 is increased, the rotational misalignment of optical fiber 10 is more likely to occur. As a result, as in optical connector 200 according to comparative example 1, the positional misalignment of the core on tip surface 11 of optical fiber 10 occurs, and the deterioration of the optical characteristics such as the increase in the connection loss may occur.

In the embodiment, as shown in FIG. 6, the length L1 of holding hole 27 of fiber holding portion 25 is set to be shorter than the length L2 of introduction hole 28. By shortening the length L1 of holding hole 27, the orientation of optical fiber 10 can be regulated in introduction hole 28 along the X direction. As a result, optical fiber 10 is centered by introduction hole 28, and the center of optical fiber 10 coincides with the center of introduction hole 28 when viewed in the X direction. By centering optical fiber 10 in this way, the center of holding hole 27 of optical fiber 10 can coincide with the center of holding hole 27 as viewed in the X direction. This makes it possible to insert coat removed portion 12 of optical fiber 10 straight into holding hole 27. When coat removed portion 12 can be inserted straight into holding hole 27, coat removed portion 12 is less likely to come into contact with holding hole 27. Accordingly, it is possible to reduce the possibility of friction occurring between coat removed portion 12 and holding hole 27. Further, when the length L1 of holding hole 27 is shorter than the length L2 of introduction hole 28, even when friction occurs between holding hole 27 and coat removed portion 12, the friction resistance between holding hole 27 and coat removed portion 12 can be reduced. As a result, it is possible to reduce the occurrence of twisting rotation of optical fiber 10 caused by friction between holding hole 27 and coat removed portion 12. This can reduce the occurrence of rotational misalignment of optical fiber 10. Thus, according to the embodiment, it is possible to hold the plurality of optical fibers 10 with high accuracy. This can reduce the occurrence of the positional deviation of core 17 on tip surface 11 of optical fiber 10. As a result, the occurrence of deterioration in optical characteristics such as an increase in connection loss can be reduced.

As in the embodiment, inside diameter D2 of introduction hole 28 may be larger than outside diameter d2 of coated portion 13, and coated portion 13 may be inserted into introduction hole 28. In this case, coated portion 13 is inserted into introduction hole 28, and thus the orientation of optical fiber 10 can be regulated to be in a state along the X direction. Thus, coat removed portion 12 can be inserted into holding hole 27 in the X direction in a state which friction between coat removed portion 12 and holding hole 27 is unlikely to occur. As a result, the occurrence of the rotational misalignment of optical fiber 10 can be reduced more reliably. Further, by using introduction hole 28 having a hole shape, coat removed portion 12 can be easily introduced from introduction hole 28 to holding hole 27.

As in the embodiment, optical fiber 10 may be any one of a multi core fiber, a polarization maintaining fiber, and a bundle fiber. In cases when optical fiber 10 is used, rotational alignment of optical fiber 10 is necessary, so the rotational misalignment of optical fiber 10 due to friction between holding hole 27 and coat removed portion 12 becomes a problem. In contrast, in the embodiment, since the occurrence of the rotational misalignment of optical fiber 10 can be reduced, the above-described effect can be suitably obtained.

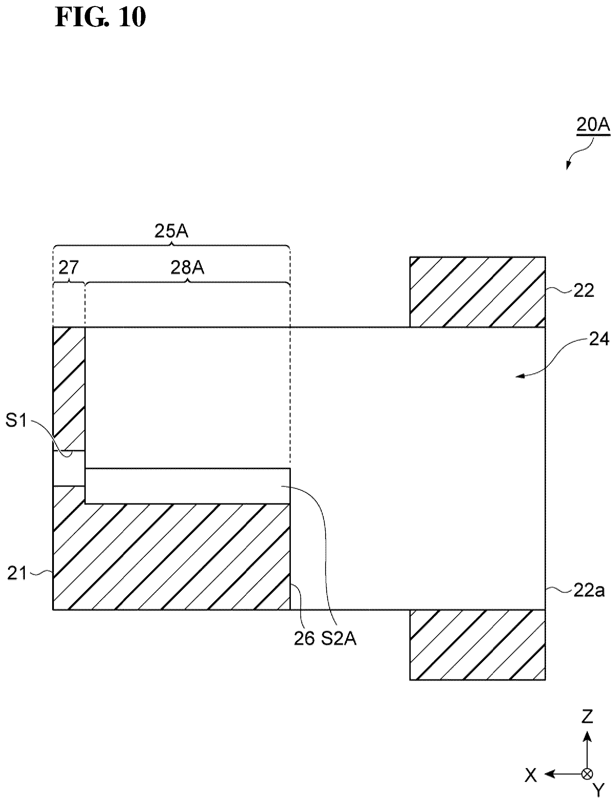

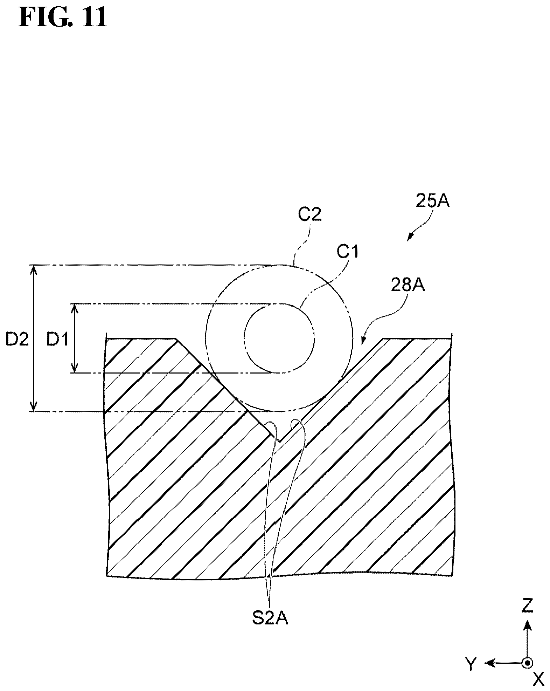

FIG. 10 is a cross-sectional view of a ferrule 20A according to the modification. FIG. 11 is a cross-sectional view of a fiber holding portion 25A provided in ferrule 20A. As shown in FIG. 10, ferrule 20A includes fiber holding portion 25A instead of fiber holding portion 25 described above. Fiber holding portion 25A includes an introduction groove 28A (an example of an "introduction portion") instead of the above-described introduction hole 28. Introduction groove 28A is, for example, a V-shaped groove extending in the X direction, and communicates with holding hole 27 in the X direction. As shown in FIG. 11, the inner wall surface of introduction groove 28A is a configuration that includes a pair of inside surfaces S2A, S2A. When viewed in the X direction, diameter D2 of imaginary circle C2 inscribed in the pair of inside surfaces S2A, S2A is larger than a diameter D1 (that is, inside diameter D1 of holding hole 27) of an imaginary circle C1 indicating inner wall surface S1 of holding hole 27. When viewed in the X direction, the center of imaginary circle C2 coincides with, for example, the center of holding hole 27. Diameter D2 of imaginary circle C2 is set to be equal to, for example, outside diameter d2 of coated portion 13 (see FIG. 2). In this case, imaginary circle C2 coincides with the outer edge of coated portion 13.

Coated portion 13 is accommodated in introduction groove 28A. By placing coated portion 13 on introduction groove 28A, the position of coated portion 13 with respect to introduction groove 28A in the YZ plane is defined, and the orientation of optical fiber 10 is regulated to a state along the X direction. Introduction groove 28A regulates the position and the orientation of optical fiber 10 in this way, thereby assisting the introduction of coat removed portion 12 into holding hole 27. Even in such a form, similar effect as optical connector 1 according to the first embodiment can be obtained. Further, when the configuration of coated portion 13 is accommodated in introduction groove 28A, optical fiber 10 can be positioned with respect to introduction groove 28A with high accuracy. Coated portion 13 being accommodated in introduction groove 28A means that at least a part of coated portion 13 is disposed in an inner space of introduction groove 28A.

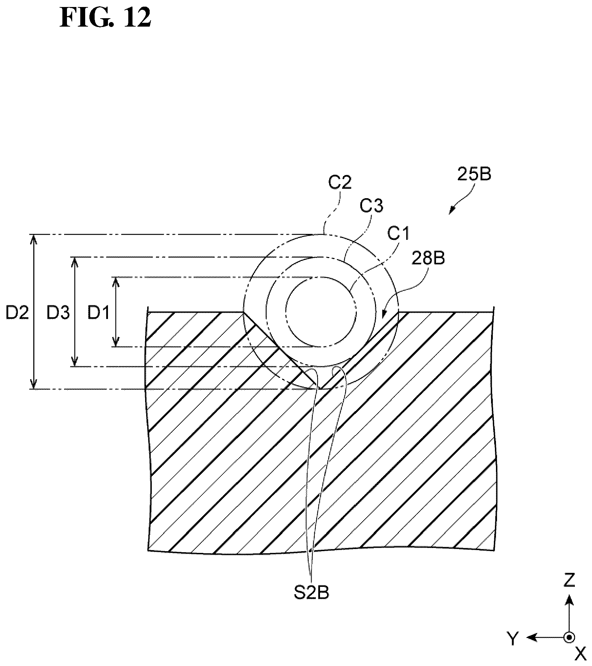

FIG. 12 is a cross-sectional view of a fiber holding portion 25B according to another modification. Fiber holding portion 25B has an introduction groove 28B (an example of an "introduction portion") in which coat removed portion 12 is accommodated. In this case, a diameter D3 of an imaginary circle C3 inscribed in the pair of inside surfaces S2B, S2B of introduction groove 28B is larger than diameter D1 of imaginary circle C1 (that is, inside diameter D1 of holding hole 27) and smaller than diameter D2 of imaginary circle C2. Diameter D2 of imaginary circle C2 coincides with outside diameter d2 of coated portion 13.

By coat removed portion 12 being accommodated in introduction groove 28B, the position of coat removed portion 12 with respect to introduction groove 28B in the YZ plane is defined, and the orientation of optical fiber 10 is regulated to a state along the X direction. Introduction groove 28B regulates the position and the orientation of optical fiber 10 in this way, thereby assisting the introduction of coat removed portion 12 into holding hole 27. Even in such a form, similar effect as optical connector 1 according to the first embodiment can be obtained. Further, when the configuration of coat removed portion 12 is accommodated in introduction groove 28B, optical fiber 10 can be positioned with respect to introduction groove 28B with high accuracy. Coat removed portion 12 being accommodated in introduction groove 28B means that at least a part of coat removed portion 12 is disposed in the inner space of introduction groove 28B.

### [Second embodiment]

Next, an optical connector 1A according to the second embodiment will be described. In the following description of the second embodiment, the description of the same parts as those of the first embodiment will be omitted as appropriate, and parts different from those of the first embodiment will be mainly described.

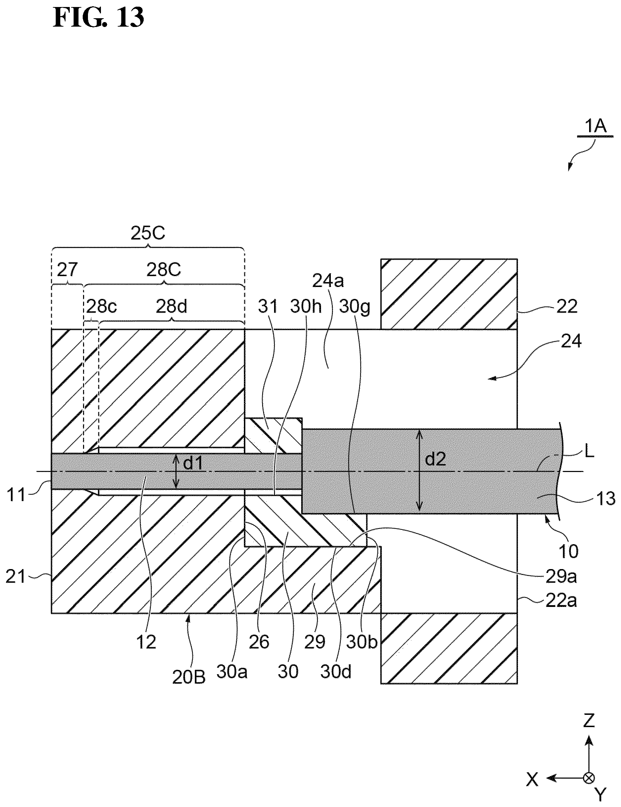

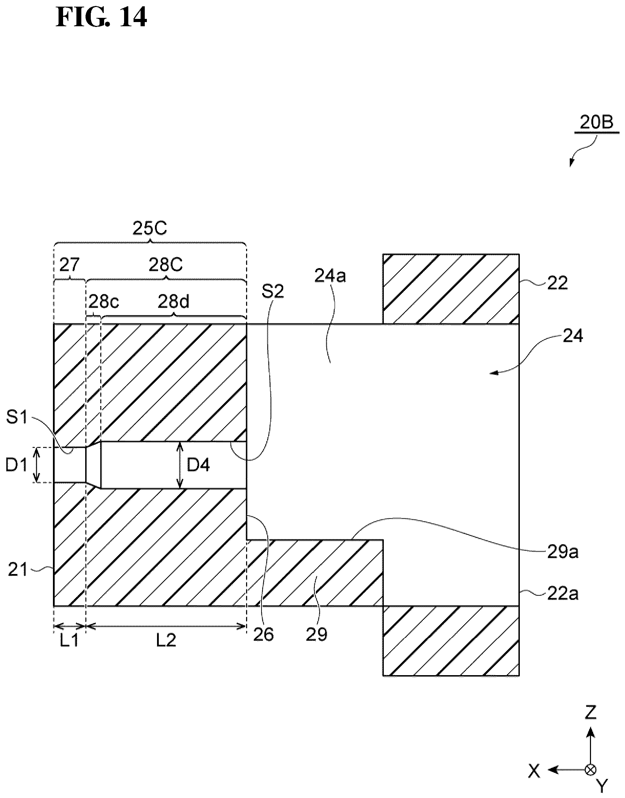

FIG. 13 is a cross-sectional view of optical connector 1A according to the second embodiment. FIG. 14 is a cross-sectional view of a ferrule 20B provided in optical connector 1A. In optical connector 1A, only coat removed portion 12 of coat removed portion 12 and coated portion 13 is inserted into an introduction hole 28C (an example of the "introduction portion") of a fiber holding portion 25C of ferrule 20B. Coated portion 13 is not inserted into introduction hole 28C, but is disposed behind introduction hole 28C (that is, outside of fiber holding portion 25C). Introduction hole 28C includes a tapered portion 28c and a constant diameter portion 28d instead of tapered portion 28a and constant diameter portion 28b. An inside diameter D4 of constant diameter portion 28d is larger than inside diameter D1 of holding hole 27. Inside diameter D4 of constant diameter portion 28d is larger than outside diameter d1 of coat removed portion 12 and smaller than outside diameter d2 of coated portion 13. The clearance between introduction hole 28C and coat removed portion 12 as viewed in the X direction is set to be, for example, 3 µm or more. As shown in FIG. 14, the length L2 of introduction hole 28C in the X direction is longer than the length L1 of holding hole 27 in the X direction. The relationship between the lengths L2 of introduction holes 28C and the lengths L1 of holding holes 27 may be the same as the relationship between the lengths L2 of introduction holes 28 and the lengths L1 of holding holes 27 described in the first embodiment.

Fiber accommodation portion 24 of ferrule 20B is provided with a fiber supporting portion 29. Fiber supporting portion 29 extends rearward from a position lower than fiber holding portion 25C on wall surface 26 of ferrule 20B. The upper surface of fiber supporting portion 29 functions as a support surface 29a for supporting an optical-fiber holding member 30. Support surface 29a is, for example, a plane extending along the X direction and the Y direction, and is formed perpendicular to wall surface 26.

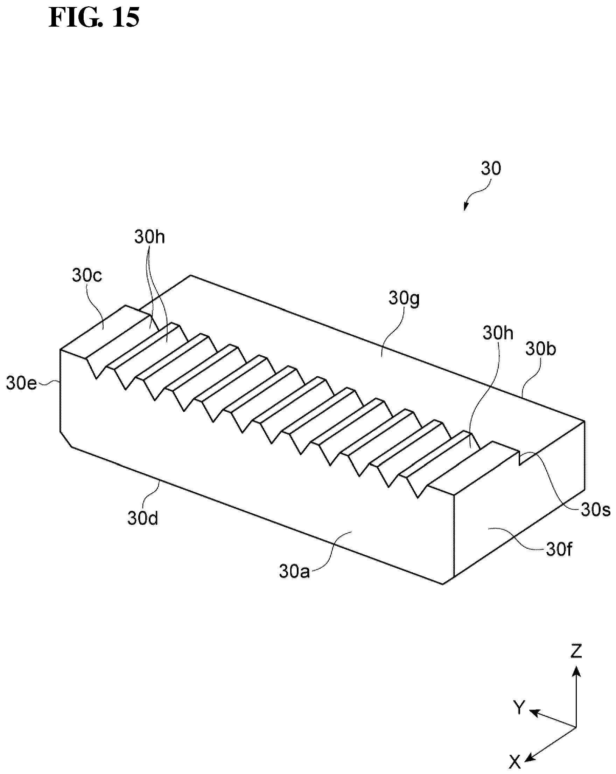

FIG. 15 is a perspective view of optical-fiber holding member 30. Optical-fiber holding member 30 is a component that holds the plurality of optical fibers 10. Optical-fiber holding member 30 is configured as a separate body from ferrule 20B and is disposed inside ferrule 20B. Optical-fiber holding member 30 is made of a material such as resin or metal. Optical-fiber holding member 30 includes, for example, a front surface 30a, a rear surface 30b, an upper surface 30c, a lower surface 30d, a side surface 30e, and a side surface 30f.

Front surface 30a is an end surface positioned at the front end of optical-fiber holding member 30 in the X direction. Rear surface 30b is an end surface positioned at the rear end of optical-fiber holding member 30 in the X direction. Front surface 30a and rear surface 30b are, for example, planes along the YZ plane and are arranged along the X direction. Upper surface 30c is an end surface positioned at the upper end of optical-fiber holding member 30 in the Z direction. Lower surface 30d is an end surface positioned at the lower end of optical-fiber holding member 30 in the Z direction. Upper surface 30c and lower surface 30d are, for example, planes along the XY plane and are arranged along the Z direction. Side surface 30e is an end surface positioned at one end of optical-fiber holding member 30 in the Y direction. Side surface 30f is an end surface positioned at the other end of optical-fiber holding member 30 in the Y direction. Side surface 30e and side surface 30f are, for example, planes along the XZ plane, and are arranged along the Y direction.

Optical-fiber holding member 30 includes a fixation surface 30g for collectively fixing coated portions 13 of the plurality of optical fibers 10 at a portion close to rear surface 30b in the X direction. Fixation surface 30g is, for example, a plane along the XY plane, and forms a step with respect to upper surface 30c. Fixation surface 30g and upper surface 30c are connected to each other through step surface 30s. Step surface 30s is, for example, a plane along the YZ plane, and is formed perpendicular to fixation surface 30g and upper surface 30c. Fixation surface 30g extends from step surface 30s to rear surface 30b in the X direction. Optical-fiber holding member 30 includes a plurality of V-shaped grooves 30h for holding coat removed portions 12 of the plurality of optical fibers 10, respectively, in a portion close to rear surface 30b in the X direction. The plurality of V-shaped grooves 30h are formed in upper surface 30c. The plurality of V-shaped grooves 30h extend in the X direction from front surface 30a to step surface 30s on upper surface 30c and are arranged along the Y direction.

As shown in FIG. 13, coat removed portions 12 of the plurality of optical fibers 10 are respectively placed on the plurality of V-shaped grooves 30h, and coated portions 13 of the plurality of optical fibers 10 are placed on fixation surface 30g. The position of optical fiber 10 in the YZ plane with respect to optical-fiber holding member 30 is defined by coat removed portion 12 being placed in each of V-shaped grooves 30h. In a state where coat removed portion 12 is placed on V-shaped groove 30h, optical fiber 10 is rotationally aligned. Each V-shaped groove 30h is a configuration that rotatably holds coat removed portion 12 around center axis L. In a state where all optical fibers 10 subjected to the rotational alignment are placed on V-shaped grooves 30h, an adhesive is applied onto optical fibers 10, and coat removed portion 12 is pressed against V-shaped grooves 30h by a cover 31 having a rectangular plate shape provided on coat removed portion 12. The adhesive is cured in this state, whereby coat removed portion 12 is fixed to V-shaped groove 30h by the adhesive. Similarly, coated portion 13 is fixed to fixation surface 30g by the adhesive. Thus, optical-fiber holding member 30 for holding the plurality of optical fibers 10 is obtained.

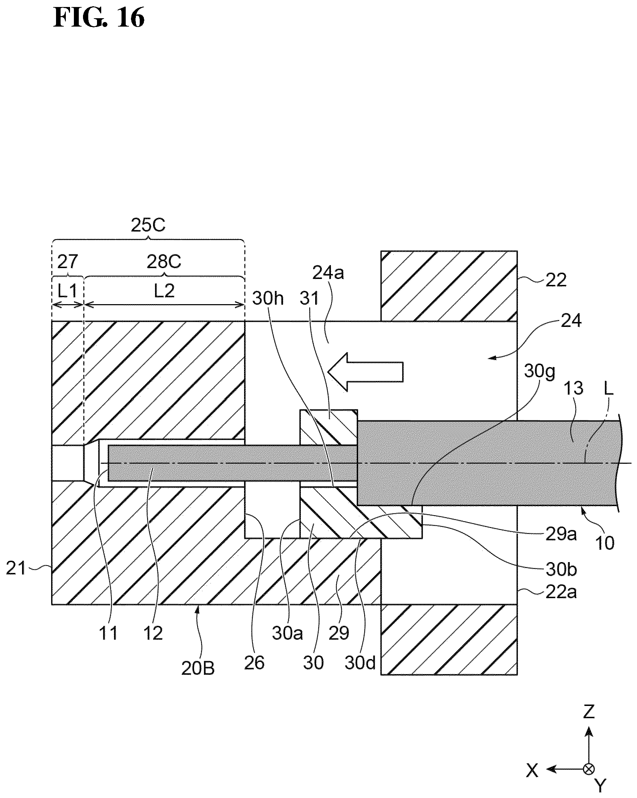

FIG. 16 is a cross-sectional view showing a state in which optical-fiber holding member 30 is mounted on ferrule 20B. As shown in FIG. 16, optical-fiber holding member 30 for holding the plurality of optical fibers 10 is disposed at a position facing the plurality of fiber holding portions 25C in the X direction inside ferrule 20B. At this time, lower surface 30d of optical-fiber holding member 30 is placed on support surface 29a of ferrule 20B, and side surface 30e of optical-fiber holding member 30 is abutted against an inside surface 24a of ferrule 20B. By thus aligning lower surface 30d and side surface 30e with support surface 29a and inside surface 24a, respectively, the position of optical-fiber holding member 30 in the YZ plane with respect to ferrule 20B is defined, and the arrangement of the plurality of optical fibers 10 held by optical-fiber holding member 30 corresponds to the arrangement of the plurality of fiber holding portions 25C.

By moving optical-fiber holding member 30 forward in the X direction in this state, coat removed portion 12 of each optical fiber 10 will be inserted into corresponding introduction hole 28C of fiber holding portion 25C. At this time, since the orientation of optical fiber 10 is regulated to be along the X direction by optical-fiber holding member 30, optical fiber 10 can be inserted straight into introduction hole 28C. Subsequently, optical-fiber holding member 30 is moved forward in the X direction until front surface 30a of optical-fiber holding member 30 abuts against wall surface 26. As a result, as shown in FIG. 13, coat removed portion 12 is inserted into holding hole 27 while the orientation of optical fiber 10 is kept along the X direction. Thereafter, optical-fiber holding member 30 for holding the plurality of optical fibers 10 is fixed to ferrule 20B by an adhesive, whereby optical connector 1A shown in FIG. 13 is obtained.

Even in such a form, similar effect as optical connector 1 according to the first embodiment can be obtained. That is, since coat removed portion 12 can be inserted into holding hole 27 in the X direction in a state in which friction between coat removed portion 12 and holding hole 27 is unlikely to occur, the occurrence of rotational misalignment of optical fiber 10 can be reduced. This makes it possible to hold the plurality of optical fibers 10 with high accuracy. As a result, the occurrence of the positional misalignment of core 17 on tip surface 11 of optical fiber 10 can be reduced, and the occurrence of the deterioration of the optical characteristics such as the increase of the connection loss can be reduced. Further, in the embodiment, optical-fiber holding member 30 is disposed inside ferrule 20B in a state where the plurality of rotationally aligned optical fibers 10 are respectively placed and fixed in the plurality of V-shaped grooves 30h of optical-fiber holding member 30. Thus, coat removed portions 12 of the plurality of optical fibers 10 can be inserted into the plurality of holding holes 27 at a time in a state where the orientation of the plurality of optical fibers 10 are aligned in the X direction. This makes it possible to more reliably reduce the possibility of friction occurring between holding hole 27 and coat removed portion 12, and to facilitate the mounting operation of the plurality of optical fibers 10 with respect to ferrule 20B. Further, optical-fiber holding member 30 is placed on support surface 29a to stably maintain the position of optical-fiber holding member 30, thereby preventing stress from being applied to optical fiber 10. Further, optical-fiber holding member 30 holds both coat removed portion 12 and coated portion 13, so that the orientation of optical fiber 10 can be more stabilized.

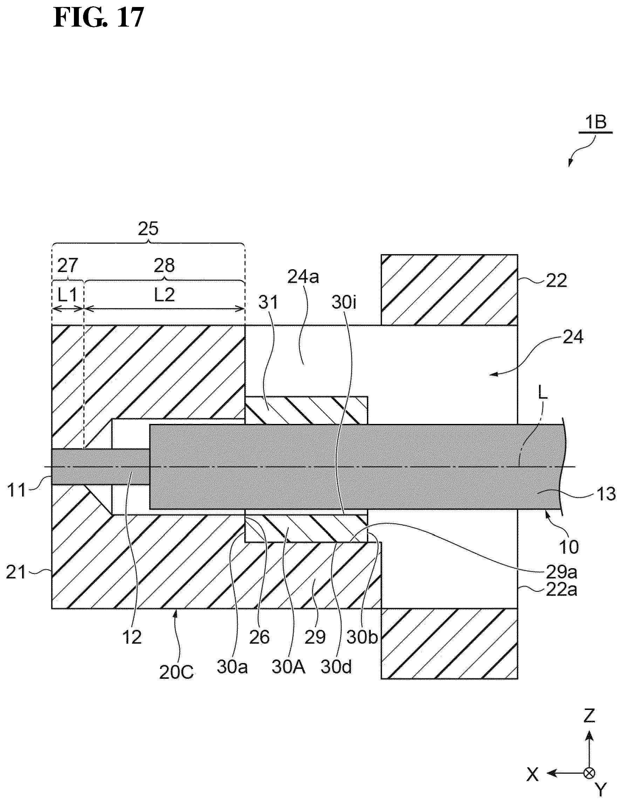

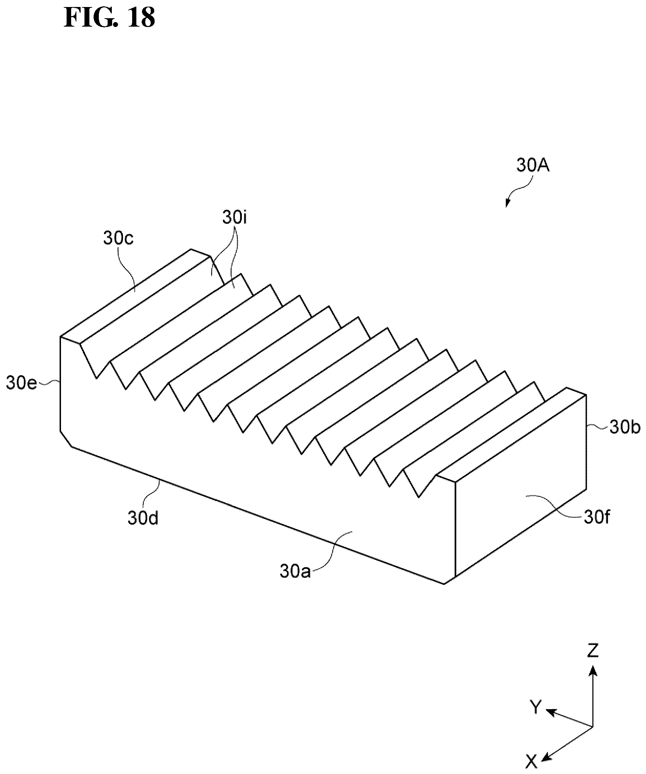

FIG. 17 is a cross-sectional view of an optical connector 1B according to a modification of the second embodiment. FIG. 18 is a perspective view of an optical-fiber holding member 30A provided in optical connector 1B. Optical connector 1B includes optical-fiber holding member 30A shown in FIG. 18 instead of optical-fiber holding member 30 shown in FIG. 15. Optical-fiber holding member 30A does not have fixation surface 30g, unlike optical-fiber holding member 30, and upper surface 30c extends from front surface 30a to rear surface 30b, and the plurality of V-shaped grooves 30i formed in upper surface 30c extend from front surface 30a to rear surface 30b. Coated portions 13 of the plurality of optical fibers 10 are placed on the plurality of V-shaped grooves 30i. Subsequently, the plurality of optical fibers 10 which have been rotationally aligned are each accommodated and fixed in the plurality of V-shaped grooves 30i. Cover 31 having a rectangular plate shape is provided on the plurality of V-shaped grooves 30i to cover coated portions 13 of the plurality of optical fibers 10.

A ferrule 20C provided in optical connector 1B has same fiber holding portion 25 as that of the first embodiment. Optical-fiber holding member 30A is disposed at a position facing fiber holding portion 25 in the X direction inside ferrule 20C in a state of holding coated portions 13 of the plurality of optical fibers 10. As shown in FIG. 17, coated portion 13 protruding forward from optical-fiber holding member 30A is inserted into introduction hole 28 of fiber holding portion 25, and coat removed portion 12 protruding further forward from coated portion 13 is inserted into holding hole 27 of fiber holding portion 25.

In this modification, as in optical connector 1A according to the second embodiment, optical-fiber holding member 30A is moved forward on support surface 29a, whereby coated portion 13 is inserted into introduction hole 28 and coat removed portion 12 is inserted into holding hole 27 while the orientation of optical fiber 10 is kept along the X direction. Thereafter, optical-fiber holding member 30A for holding the plurality of optical fibers 10 is fixed to ferrule 20C by an adhesive, and optical connector 1B shown in FIG. 17 is obtained. Even in such a form, similar effect as optical connector 1A according to the second embodiment can be obtained.

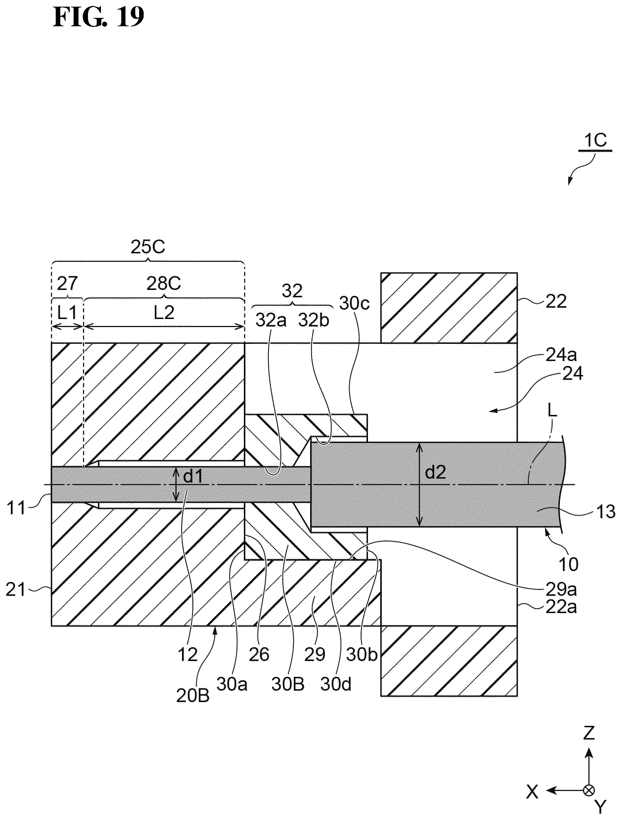

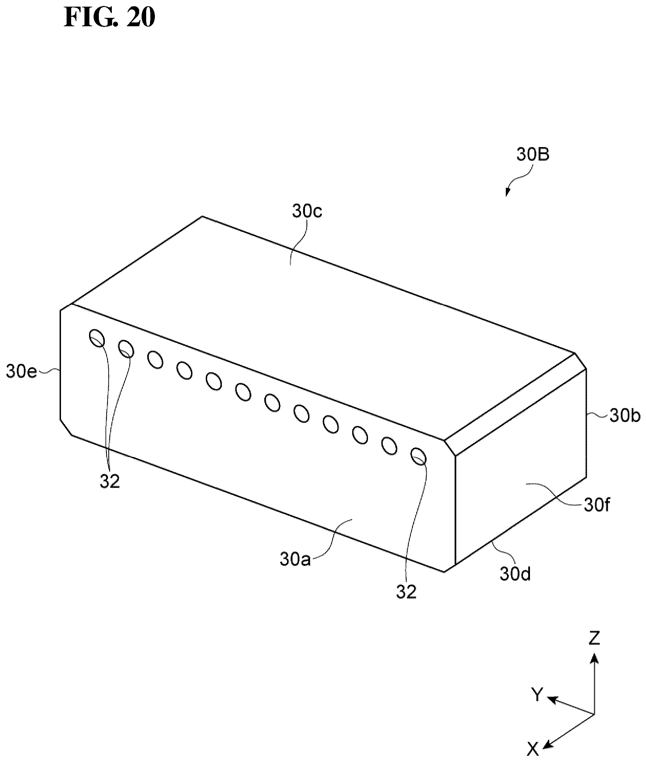

FIG. 19 is a cross-sectional view of an optical connector 1C according to another modification of the second embodiment. FIG. 20 is a perspective view showing an optical-fiber holding member 30B provided in optical connector 1C. Optical connector 1C includes optical-fiber holding member 30B of FIG. 20 instead of optical-fiber holding member 30 of FIG. 15. Optical-fiber holding member 30B does not have fixation surface 30g, unlike optical-fiber holding member 30, and upper surface 30c extends from front surface 30a to rear surface 30b. Subsequently, optical-fiber holding member 30B includes a plurality of through holes 32 instead of the plurality of V-shaped grooves 30h. The plurality of through holes 32 penetrate in the X direction from front surface 30a to rear surface 30b and are arranged along the Y direction. The plurality of optical fibers 10 are each inserted into the plurality of through holes 32.

As shown in FIG. 19, each through hole 32 has a small-diameter portion 32a and a large-diameter portion 32b. Coat removed portion 12 of optical fiber 10 is inserted into small-diameter portion 32a. The inside diameter of small-diameter portion 32a is set to be equal to outside diameter d1 of coat removed portion 12 or slightly larger than outside diameter d1 of coat removed portion 12. Large-diameter portion 32b has an inside diameter larger than the inside diameter of small-diameter portion 32a. Coated portion 13 of optical fiber 10 is inserted into large-diameter portion 32b. The inside diameter of large-diameter portion 32b is set to be equal to outside diameter d2 of coated portion 13 or slightly larger than outside diameter d2 of coated portion 13. In a state in which coat removed portion 12 and coated portion 13 are each inserted into small-diameter portion 32a and large-diameter portion 32b, optical fiber 10 is rotationally aligned and optical fiber 10 is fixed to through hole 32 by an adhesive injected into through hole 32.

Optical connector 1C includes ferrule 20B which is the same as that of the second embodiment. Optical-fiber holding member 30B is disposed at a position facing fiber holding portion 25C in the X direction inside ferrule 20B in a state of holding the plurality of optical fibers 10. As shown in FIG. 19, coated portion 13 protruding forward from optical-fiber holding member 30B is inserted into introduction hole 28C of fiber holding portion 25C, and coat removed portion 12 protruding further forward from coated portion 13 is inserted into holding hole 27 of fiber holding portion 25C.

In this modification, as in optical connector 1A according to the second embodiment, optical-fiber holding member 30B is moved forward on support surface 29a, whereby coated portion 13 is inserted into introduction hole 28C and coat removed portion 12 is inserted into holding hole 27 while the orientation of optical fiber 10 is kept along the X direction. Thereafter, optical-fiber holding member 30B for holding the plurality of optical fibers 10 is fixed to ferrule 20B by an adhesive, and optical connector 1C shown in FIG. 19 is obtained. Even in such a form, similar effect as optical connector 1A according to the second embodiment can be obtained. Through hole 32 may have only small-diameter portion 32a, and may hold only coat removed portion 12 by small-diameter portion 32a. Alternatively, through hole 32 may have only large-diameter portion 32b, and may hold only coated portion 13 by large-diameter portion 32b.

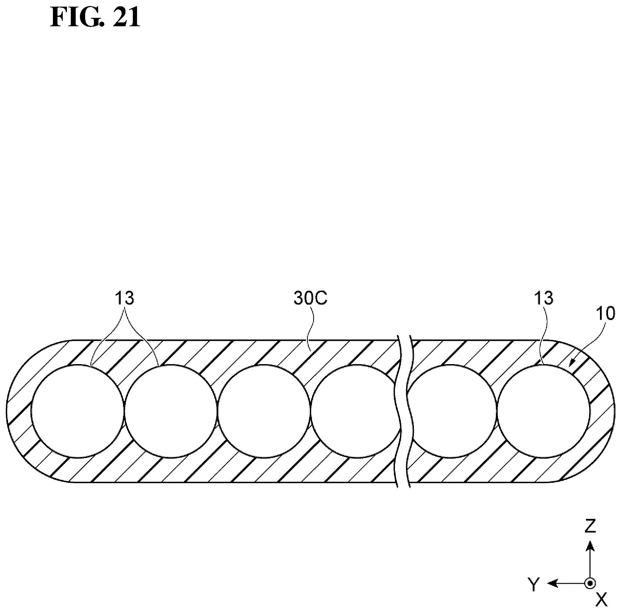

FIG. 21 is a cross-sectional view showing a modification of optical-fiber holding member 30. As shown in FIG. 21, an optical-fiber holding member 30C is a resin layer that collectively covers coated portions 13 of the plurality of optical fibers 10. Optical-fiber holding member 30C constitutes a tape fiber including a plurality of optical fibers 10. Optical-fiber holding member 30C is used to restrict a change in position between the plurality of optical fibers 10. Optical-fiber holding member 30C integrally holds coated portions 13 of the plurality of optical fibers 10 in a state where the plurality of optical fibers 10 are arranged in the Y direction and are rotationally aligned. Optical-fiber holding member 30C is disposed at a position facing fiber holding portion 25 in the X direction inside ferrule 20C, for example, in a state of holding the plurality of optical fibers 10. Even in such a form, similar effect as optical connector 1A according to the second embodiment can be obtained.

The present disclosure is not limited to the above-described embodiments and modifications, and various modifications can be made. For example, the embodiments and modifications described above may be combined with each other within a consistent range in accordance with the required object and effect. The configuration of the optical connector is not limited to the above-described embodiments and modifications. For example, the fiber holding portion of the ferrule may not include the tapered portion, and may include only the holding hole and the introduction portion. The introduction groove of the fiber holding portion is not limited to the V-shaped groove, and may be a groove having another shape such as a U-shaped groove or a rectangular groove.

### REFERENCE SIGNS LIST

1, 1A, 1B, 1C optical connector
1a First optical connector
1b Second optical connector
10 optical fiber
11 tip surface
12 coat removed portion
13 coated portion
15 resin coat
16 cladding
17 core
17a center core
17b peripheral core
20, 20A, 20B, 20C ferrule
21 front end surface
22 rear end surface
22a opening
23 guide hole
24 fiber accommodation portion
24a inside surface
25, 25A, 25B, 25C fiber holding portion
26 wall surface
27 holding hole
28, 28C introduction hole (an example of "introduction portion")
28A 28B introduction groove (an example of an "introduction portion")
28a tapered portion
28b constant diameter portion
29 fiber supporting portion
29a support surface
30, 30A, 30B, 30C optical-fiber holding member
30a front surface
30b rear surface
30c upper surface
30d lower surface
30e 30f side surface
30g fixation surface
30h, 30i V-shaped groove
30s step surface
31 cover
32 through hole
32a small-diameter portion
32b large-diameter portion
40 guide pin
50 spacer
50a opening
100 optical coupling structure
C1, C2, C3 imaginary circle
D1, D2, D4 inside diameter
D1, D2, D3 diameter
d1, d2 outside diameter
L center axis
P1 connection portion
S1, S2 inner wall surface
S2A, S2B inside surface

## Claims

1. An optical connector comprising:
a plurality of optical fibers each including a coat removed portion from which a resin coat having a predetermined length from a tip surface is removed, a coated portion on which the resin coat remains, and at least one of a core and a stress applying portion at a position shifted from a center axis; and
a ferrule having a front end surface and a rear end surface that are arranged in a first direction in which the center axis extends, the ferrule including a plurality of fiber holding portions each extending between the front end surface and the rear end surface in the first direction such that the plurality of fiber holding portions are arranged in a second direction intersecting the first direction, the plurality of fiber holding portions being each configured to hold a corresponding one of the plurality of optical fibers,
wherein each of the plurality of fiber holding portions has
a holding hole into which the coat removed portion is inserted in the first direction, the holding hole being configured to hold the coat removed portion so as to maintain a position of the coat removed portion in a plane perpendicular to the first direction, and
an introduction portion located between the holding hole and the rear end surface and having an inner wall surface in which an imaginary circle having a diameter larger than an inside diameter of the holding hole is inscribed, and
wherein a length of the holding hole in the first direction is shorter than a length of the introduction portion in the first direction.

2. The optical connector according to claim 1,
wherein the introduction portion is an introduction hole in communication with the holding hole in the first direction,
wherein an inside diameter of the introduction hole defined by the diameter of the imaginary circle is larger than or equal to an outside diameter of the coated portion, and
wherein the coated portion is inserted into the introduction hole.

3. The optical connector according to claim 1,
wherein the introduction portion is an introduction hole in communication with the holding hole in the first direction,
wherein an inside diameter of the introduction hole defined by the diameter of the imaginary circle is larger than or equal to an outside diameter of the coat removed portion, and
wherein, between the coat removed portion and the coated portion, only the coat removed portion is inserted into the introduction hole.

4. The optical connector according to claim 1,
wherein the introduction portion is an introduction groove in communication with the holding hole in the first direction,
wherein a diameter of the imaginary circle inscribed in the introduction groove is larger than or equal to an outside diameter of the coat removed portion, and
wherein, between the coat removed portion and the coated portion, only the coat removed portion is accommodated in the introduction groove.

5. The optical connector according to claim 1,
wherein the introduction portion is an introduction groove in communication with the holding hole in the first direction,
wherein a diameter of the imaginary circle inscribed in the introduction groove is larger than or equal to an outside diameter of the coated portion, and
wherein the coated portion is accommodated in the introduction groove.

6. The optical connector according to any one of claim 1 to claim 5, further comprising:
an optical-fiber holding member disposed at a position inside the ferrule at which the optical-fiber holding member faces the plurality of fiber holding portions in the first direction, the optical-fiber holding member being configured to hold the plurality of optical fibers.

7. The optical connector according to claim 6,
wherein the optical-fiber holding member is a resin layer configured to collectively cover the coated portions of the plurality of optical fibers.

8. The optical connector according to claim 6,
wherein the optical-fiber holding member has a plurality of V-shaped grooves each extending in the first direction such that the plurality of V-shaped grooves are arranged in the second direction, the plurality of V-shaped grooves being each configured to accommodate a corresponding one of the plurality of optical fibers.

9. The optical connector according to claim 6,
wherein the optical-fiber holding member has a plurality of through holes each extending through the optical-fiber holding member in the first direction such that the plurality of through holes are arranged in the second direction, the plurality of through holes being each configured to allow a corresponding one of the plurality of optical fibers to extend therethrough.

10. The optical connector according to any one of claim 1 to claim 9,
wherein each of the optical fibers is any one of a multi core fiber, a polarization maintaining fiber, and a bundle fiber.

11. A ferrule configured to hold a plurality of optical fibers each including a coat removed portion from which a resin coat having a predetermined length from a tip surface is removed, a coated portion on which the resin coat remains, and at least one of a core and a stress applying portion at a position shifted from a center axis, the ferrule comprising:
a front end surface;
a rear end surface, the rear end surface and the front end surface being arranged in a first direction; and
a plurality of fiber holding portions each extending between the front end surface and the rear end surface in the first direction such that the plurality of fiber holding portions are arranged in a second direction intersecting the first direction, the plurality of fiber holding portions being each configured to hold a corresponding one of the plurality of optical fibers,
wherein each of the plurality of fiber holding portions has
a holding hole into which the coat removed portion is inserted in the first direction, the holding hole being configured to maintain a position of the coat removed portion in a plane perpendicular to the first direction, and
an introduction portion located between the holding hole and the rear end surface and having an inner wall surface in which an imaginary circle having a diameter larger than an inside diameter of the holding hole is inscribed, and
wherein a length of the holding hole in the first direction is shorter than a length of the introduction portion in the first direction.

12. An optical coupling structure comprising:
a first optical connector and a second optical connector as the optical connectors according to any one of claim 1 to claim 10,
wherein the first optical connector is disposed to face the second optical connector in the first direction and is optically coupled to the second optical connector.
